# EUROPEAN PATENT SPECIFICATION

(11) **EP 3 799 198 B1**
(45) Date of publication and mention of the grant of the patent: **02.10.2024**
(21) Application number: 20194852.8
(22) Date of filing: 07.09.2020
(51) Int. Cl.: H01M 50/531, H01M 50/533, H01M 50/538, H01M 50/54

(54) **SECONDARY BATTERY**
SEKUNDÄRBATTERIE
BATTERIE SECONDAIRE

(30) Priority: 30.09.2019 KR 20190120630
(43) Date of publication of application: 31.03.2021
(73) Proprietor: Samsung SDI Co., Ltd., Yongin-si, Gyeonggi-do 17084 (KR)
(72) Inventor: Kim, Jin Nam, 17084 Yongin-si, Gyeonggi-do (KR); Cho, Chang Hun, 17084 Yongin-si, Gyeonggi-do, (KR)
(74) Representative: Gulde & Partner

(56) References cited:
- EP-A1- 2 337 117
- EP-A1- 2 453 501
- EP-A1- 2 490 282
- EP-A1- 2 551 939
- EP-A1- 2 866 280
- EP-A2- 2 472 642
- EP-A2- 3 416 213
- JP-A- 2002 075 322
- JP-A- 2005 142 026
- US-A1- 2005 221 178
- US-A1- 2011 183 165
- US-A1- 2012 196 164
- US-A1- 2013 337 295
- US-A1- 2014 234 673

## Description

### BACKGROUND

### 1. Field

Aspects of embodiments of the present disclosure relate to a secondary battery.

### 2. Description of the Related Art

Unlike a primary battery, a secondary battery can be repeatedly charged and discharged. A low-capacity secondary battery is used for various small portable electronic devices such as mobile phones, camcorders, or laptop computers, and a high-capacity secondary battery is extensively used as a power source for driving electronic devices such as a motor of a hybrid car or an electric car, a power storage cell, and the like.

In addition, the secondary battery may be classified as a cylindrical type, a prismatic type or a pouch type according to the external shape of the secondary battery. Among others, a prismatic secondary battery may include an electrode assembly, a case having a rectangular parallelepiped shape and accommodating the electrode assembly and an electrolyte, a cap plate sealing the case, and electrode terminals installed on the cap plate.

Secondary batteries of the state of art usually include an electrode assembly comprising a positive electrode plate having a positive electrode non-coating portion, a negative electrode plate having a negative electrode non-coating portion, and a separator between the positive electrode plate and the negative electrode plate. The positive electrode non-coating portion and the negative electrode non-coating portion are exposed at opposite sides of the electrode assembly. A case having a top opening and an internal space accommodates the electrode assembly and a cap plate seals the top opening of the case. A positive electrode current collector plate is welded to the positive electrode non-coating portion and a negative electrode current collector plate is welded to the negative electrode non-coating portion. A positive electrode terminal on the cap plate is electrically connected to the positive electrode current collector plate and a negative electrode terminal on the cap plate is electrically connected to the negative electrode current collector plate. Exemplary embodiments of secondary batteries are disclosed in EP 2 337 117 A1, US 2011/183165 A1, EP 2 472 642 A2, EP 2 866 280 A1, EP 3 416 213 A2, US 2013/337295 A1, EP 2 551 939 A1, EP 2 490 282 A1, US 2012/196164 A1, JP 2002 075322 A, JP 2005 142026 A, US 2014/234673 A1, EP 2 453 501 A1 and US 2005/221178 A1.

### SUMMARY

Embodiments of the present disclosure related to a secondary battery which is capable of increasing battery capacity and improving welding quality compared to related art secondary batteries. The invention is defined in the appended claims.

According to the present invention there is provided a secondary battery are defined in claim 1. The secondary battery includes an electrode assembly constructed in a stack type including a positive electrode plate having a positive electrode non-coating portion, a negative electrode plate having a negative electrode non-coating portion, and a separator between the positive electrode plate and the negative electrode plate, the positive electrode non-coating portion and the negative electrode non-coating portion being exposed at opposite sides of the electrode assembly, a case having a top opening and an internal space accommodating the electrode assembly, a cap plate sealing the top opening of the case, a positive electrode current collector plate perpendicular and welded to the positive electrode non-coating portion, a negative electrode current collector plate perpendicular and welded to the negative electrode non-coating portion, a positive electrode terminal on the cap plate and electrically connected to the positive electrode current collector plate, and a negative electrode terminal on the cap plate and electrically connected to the negative electrode current collector plate.

In addition, the electrode assembly also includes a second separator and the positive electrode plate, the separator, the negative electrode plate and the second separator may be sequentially stacked in Y-axis direction. A laser welding line, which joins the positive electrode current collector plate to the positive electrode non-coating portion, is formed along the Y-axis direction, and a laser welding line, which joins the negative electrode current collector plate to the negative electrode non-coating portion is formed along the Y-axis direction.

In addition, the positive electrode current collector plate and/or the negative electrode current collector plate may have an area equal to the cross-sectional area of the electrode assembly.

In addition, the electrode assembly may be wound about a winding axis into a jelly roll configuration such that the positive electrode non-coating portion is exposed at one end of the winding axis, and the negative electrode non-coating portion is exposed to the other end of the winding axis, and the winding axis is horizontally aligned on the top opening.

In addition, the electrode assembly may have a cross section elongated in a top-down direction, the cross section being perpendicular to the winding axis, and the electrode assembly may include a series of electrode assemblies that are stacked on each other along a direction transverse to the top-down direction.

In addition, the positive electrode current collector plate and/or the negative electrode current collector plate may have an area equivalent to the overall area of cross sections of the series of electrode assemblies.

In addition, the positive electrode non-coating portion is in line-contact with the positive electrode current collector plate, and the negative electrode non-coating portion is in line-contact with the negative electrode current collector plate.

In addition, an entirety of the positive electrode current collector plate may contact an entirety of the positive electrode non-coating portion, and an entirety of the negative electrode current collector plate may contact an entirety of the negative electrode non-coating portion.

As described above, according to embodiments of the present disclosure, since an electrode non-coating portion is in line-contact with an electrode current collector plate, the area of the electrode non-coating portion can be reduced, compared to a related art secondary battery where the electrode non-coating portion is in surface-contact with the electrode current collector plate, thereby increasing battery capacity, and ultimately simplifying the manufacturing process.

### BRIEF DESCRIPTION OF DRAWINGS

FIG. 1 is a perspective view of a secondary battery according to an embodiment of the present disclosure.
FIG. 2 is an exploded view of the secondary battery according to an embodiment not falling under the present invention.
FIG. 3 is an exploded view of a secondary battery according to an embodiment of the present invention.

### DETAILED DESCRIPTION

Hereinafter, embodiments of the present disclosure will be described in detail.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

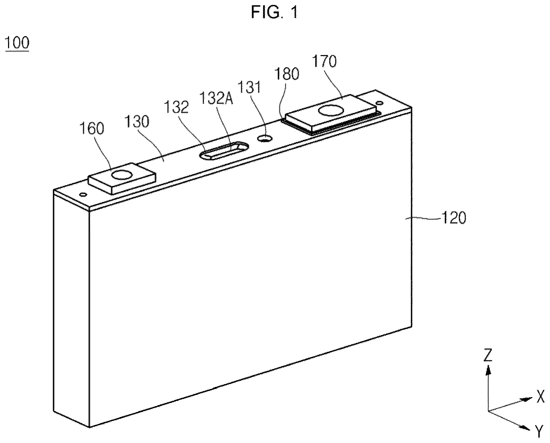

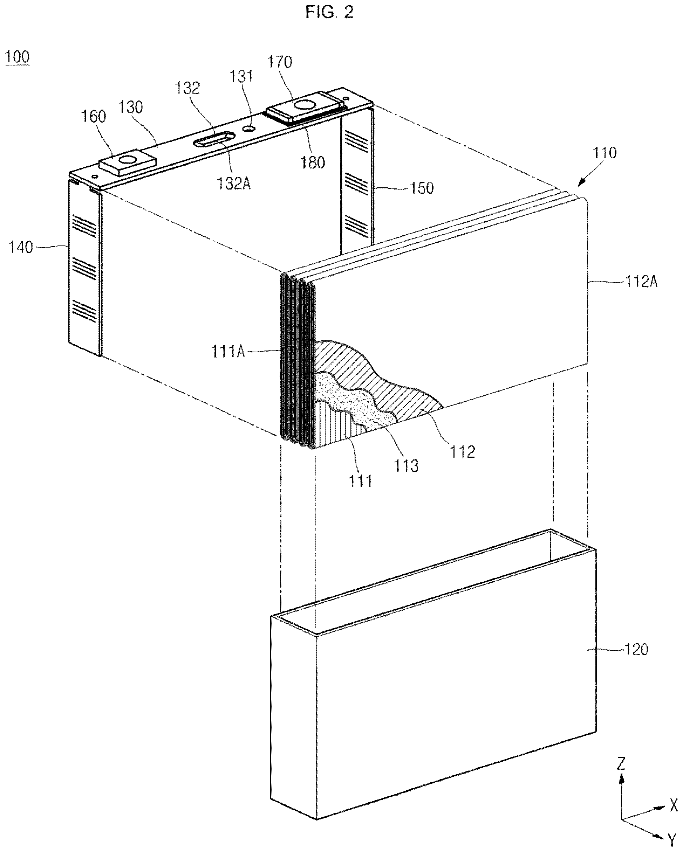

FIG. 1 is a perspective view of a secondary battery 100 according to an embodiment of the present disclosure, and FIG. 2 is an exploded view of the secondary 100 battery according to an embodiment not falling under the present invention.

Referring to FIGS. 1 and 2, the secondary battery 100 according to an embodiment includes an electrode assembly 110, a case 120, a cap plate 130, a positive electrode current collector plate 140, a negative electrode current collector plate 150, a positive electrode terminal 160, and a negative electrode terminal 170.

The electrode assembly 110 includes a positive electrode plate 111, a negative electrode plate 112, and a separator 113 between the positive electrode plate 111 and the negative electrode plate 112.

The positive electrode plate 111 has a positive electrode coating portion with a positive electrode active material coated thereon, and a positive electrode non-coating portion 111A without a positive electrode active material coated thereon. The positive electrode coating portion (including, for example, a transition metal oxide) is formed on a positive electrode current collector made of, for example, an aluminum foil, and the positive electrode non-coating portion 111A is formed along one side of the positive electrode current collector.

In addition, the negative electrode plate 112 has a negative electrode coating portion with a negative electrode active material coated thereon, and a negative electrode non-coating portion 112A without a negative electrode active material coated thereon. The negative electrode coating portion (including, for example, carbon or graphite) is formed on a negative electrode current collector made of, for example, a copper or nickel foil, and the negative electrode non-coating portion 112A is formed along one side of the negative electrode current collector.

The separator 113 is an insulator and may be made of, for example, polyethylene, polypropylene, or a composite film of polypropylene and polyethylene. The separator 113 is located between the positive electrode plate 111 and the negative electrode plate 112 to prevent a short circuit from occurring between the positive electrode plate 111 and the negative electrode plate 112 and to allow the movement of lithium ions.

The electrode assembly 110, including the positive electrode plate 111, the negative electrode plate 112 and the separator 113, is wound about a winding axis into a so-called jelly roll configuration. In one or more embodiments, the positive electrode non-coating portion 111A is wound about the winding axis so as to be exposed at one end of the winding axis, and the negative electrode non-coating portion 112A is wound about the winding axis so as to be exposed at the other end of the winding axis. In FIG. 2, the winding axis is aligned along the X-axis direction, the positive electrode non-coating portion 111A is exposed at the minus (-) side in the X-axis direction, and the negative electrode non-coating portion 112A is exposed at the plus (+) side in the X-axis direction. Accordingly, in the illustrated embodiment, the winding axis is horizontally aligned with the top opening of the case 120.

In addition, in one or more embodiments, a cross-sectional shape of the electrode assembly 110 in a plane perpendicular to the winding axis (e.g., a Y-Z plane) may be a circle, or may be an ellipse, or an oblong shape that is elongated along the Z axis direction. Accordingly, in one or more embodiments, the electrode assembly 100 has a cross section in a plane perpendicular to the winding axis (e.g., a Y-Z plane) that is elongated in a top-down direction (i.e., a direction along the Z-axis). Additionally, in the illustrated embodiment, the plurality of electrode assemblies 100 are stacked along a direction transverse to the top-down direction (e.g., the plurality of electrode assemblies 100 are stacked in the Y-axis direction).

Additionally, the electrode assembly 110 may include a plurality of electrode assemblies, which are adjacently stacked one on another along the Y-axis direction.

The case 120 is shaped of a substantially rectangular parallelepiped having an internal space and a top opening (e.g., an open top). Accordingly, the internal space of the case 120 may serve to accommodate the electrode assembly 110 and an electrolyte.

The electrolyte may include, for example, an organic solvent such as ethylene carbonate (EC), propylene carbonate (PC), diethyl carbonate (DEC), dimethyl carbonate (DMC), ethyl methyl carbonate (EMC), and a lithium salt such as LiPF₆ or LibF₄.

The cap plate 130 is coupled to a top end of the case 120 and seals the top surface of the case 120 (e.g., the cap plate 130 covers or closes the top opening of the case 12). The case 120 and the cap plate 130 may be made of, for example, aluminum, and welded together.

In addition, the cap plate 130 may have an electrolyte injection hole and a vent hole.

The electrolyte injection hole is provided for injecting an electrolyte into the interior space of the case 120 after the cap plate 130 is coupled to the case 120. Once the electrolyte is injected, the electrolyte injection hole is sealed by a plug 131.

The vent hole is configured to discharge or vent internal gases generated inside the case 120 and thereby prevent an explosion due to the internal gases generated inside the case 120. The vent hole is sealed by a vent member 132 at normal times, and is opened as the vent member 132 is naturally ruptured when the internal pressure of the case 120 reaches a certain level (e.g., the vent member 132 is configured to rupture when a threshold internal pressure is reached inside the case 120). In addition, the vent member 132 may have a notch 132A formed therein that is configured to facilitate the rupturing of the vent member 132 around the notch 132A.

The positive electrode current collector plate 140 may be formed of, for example, an aluminum plate, and may be perpendicular to the positive electrode non-coating portion 111A. The positive electrode current collector plate 140 may be welded to the positive electrode non-coating portion 111A. In one or more embodiments, the positive electrode non-coating portion 111A is in line-contact with the positive electrode current collector plate 140. With this structure, the area of the positive electrode non-coating portion 111A may be reduced, compared to an embodiment in which the positive electrode non-coating portion 111A is in surface-contact with the positive electrode current collector plate 140, thereby increasing battery capacity of the secondary battery 100.

In addition, the positive electrode current collector plate 140 may be formed to have an area equivalent or substantially equivalent to an area of the overall cross sections of the positive electrode non-coating portions 111A of the plurality of electrode assemblies 110, and thus an entirety or substantially an entirety of the positive electrode current collector plate 140 may contact an entirety or substantially an entirety of the positive electrode non-coating portions 111A of the plurality of electrode assemblies 110. Accordingly, resistance between the positive electrode non-coating portion 111A and the positive electrode current collector plate 140 may be minimized or at least reduced compared to a second battery not having this configuration.

In one or more embodiments, the positive electrode current collector plate 140 may be welded to the positive electrode non-coating portion 111A by a laser. In this embodiment, during the task of laser welding the positive electrode current collector plate 140 to the positive electrode non-coating portion 111A, the laser may be irradiated along the Y-axis direction. In other words, the laser welding line joining the positive electrode current collector plate 140 to the positive electrode non-coating portion 111A may be formed along the Y-axis direction. In one or more embodiments, the laser may be irradiated with an appropriate intensity so as not to completely fuse the positive electrode current collector plate 140 or the positive electrode non-coating portion 111A. If the laser irradiated is strong enough to completely fuse the positive electrode current collector plate 140, foreign substances (for example, spattered substances) may be induced to the electrode assembly 110, which may result in a short circuit or other damage to the secondary battery 100. However, if the laser irradiated is not strong enough to completely fuse the positive electrode current collector plate 140, the above-described problem(s) can be avoided.

In addition, since the electrode assembly 110 is wound into a jelly roll configuration, the self-supporting ability of the positive electrode non-coating portion 111A may be increased by the curvature thereof. Therefore, the positive electrode non-coating portion 111A may be prevented from being undesirably deformed when the positive electrode current collector plate 140 is pressed against the positive electrode non-coating portion 111A.

Moreover, since the electrode assembly 110 comprises a plurality of electrode assemblies, each of the plurality of electrode assemblies may be relatively narrow and long for a given interior volume of the case 120, compared to an embodiment in which the electrode assembly 110 includes only a single electrode assembly. The self-supporting ability of the positive electrode non-coating portion 111A may be further increased by allowing the positive electrode non-coating portion 111A to have larger curvatures at top and bottom ends thereof, which also improves weld quality between the positive electrode non-coating portion 111A and the positive electrode current collector plate 140.

The negative electrode current collector plate 150 may be formed of, for example, a copper or nickel plate, and may be perpendicular to the negative electrode non-coating portion 112A. The negative electrode current collector plate 150 may be welded to the negative electrode non-coating portion 112A.

The negative electrode current collector plate 150 may also be formed to have an area equivalent or substantially equivalent to an area of the overall cross sections of negative electrode non-coating portions 112A of a plurality of electrode assemblies 110, and thus an entirety or substantially an entirety of the negative electrode current collector plate 150 may contact an entirety or substantially an entirety of the negative electrode non-coating portions 112A of the plurality of electrode assemblies 110.

In one or more embodiments, the negative electrode current collector plate 150 may be welded to the negative electrode non-coating portion 112A by a laser. In this embodiment, during the task of laser welding the negative electrode current collector plate 150 to the negative electrode non-coating portion 112A, the laser may be irradiated along the Y-axis direction with an appropriate intensity so as not to completely fuse the negative electrode current collector plate 150 or the negative electrode non-coating portion 112A.

Since the resulting effects are substantially the same as those described above with respect to the positive electrode current collector plate 140 and the positive electrode non-coating portion 111A, a repeated description thereof will be omitted.

The positive electrode terminal 160 is installed on the cap plate 130 and is electrically connected to the positive electrode current collector plate 140.

In addition, the negative electrode terminal 170 is installed on the cap plate 130 and is electrically connected to the negative electrode current collector plate 150.

If the positive electrode terminal 160 is in contact with the cap plate 130, an insulation member 180 is provided between the negative electrode terminal 170 and the cap plate 130 (e.g., the negative electrode terminal 170 is spaced apart, and electrically isolated, from the cap plate 130 by the insulation member 180) to prevent a short circuit.

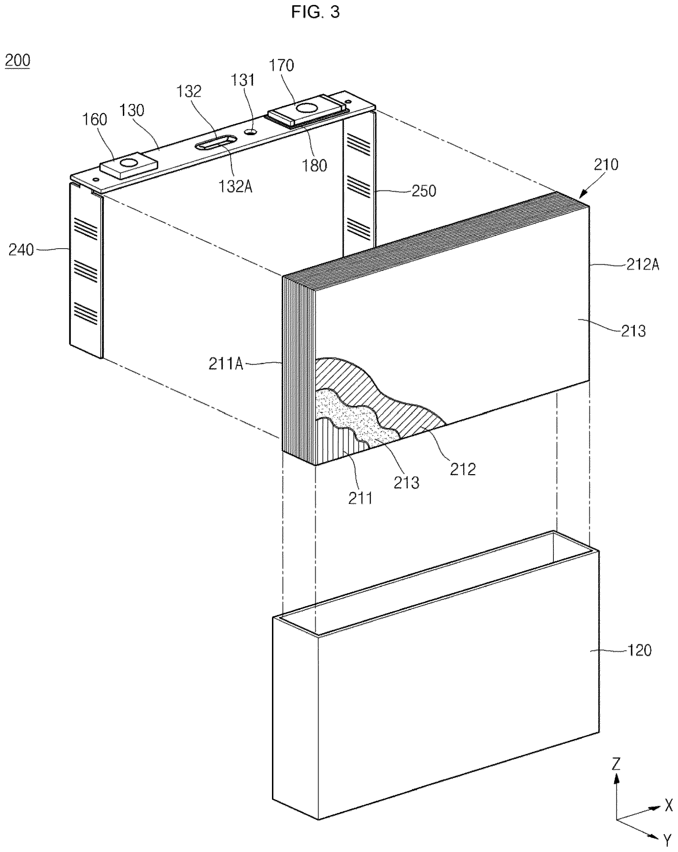

FIG. 3 is an exploded view of a secondary battery 200 according to an embodiment of the present invention.

The secondary battery 200 according to another embodiment differs from the secondary battery 100 described above with reference to FIGS. 1 and 2 in that the former includes an electrode assembly 210 constructed in a stack type, and the other details are substantially the same in both embodiments, and thus repeated descriptions of the common components and/or features will be omitted. The common components and/or features of the embodiment illustrated in FIG. 3 and the embodiment illustrated in FIGS. 1-2 are identified with the same reference numbers.

Referring to FIG. 3, the electrode assembly 210 includes a positive electrode plate 211, a separator 213, a negative electrode plate 212, and another separator 213 sequentially stacked in that order. In the resulting stack, a positive electrode non-coating portion 211A and a negative electrode non-coating portion 212A are exposed on opposite sides. In FIG. 3, the positive electrode non-coating portion 211A is exposed at the minus (-) side in the X-axis direction and the negative electrode non-coating portion 212A exposed at the plus (+) side in the X-axis direction.

In the illustrated embodiment, the secondary battery 200 also includes a positive electrode current collector plate 240 and a negative electrode current collector plate 250 coupled to the cap plate 130. The positive electrode current collector plate 240 may be perpendicular to the positive electrode non-coating portion 211A, and the positive electrode current collector plate 240 may be welded to the positive electrode non-coating portion 211A (e.g., by a laser). The positive electrode current collector plate 240 has an area equivalent or substantially equivalent to a cross-sectional area of the electrode assembly 210 in the Y-Z plane.

The negative electrode current collector plate 250 may be perpendicular to the negative electrode non-coating portion 212A, and the negative electrode current collector plate 250 may be welded to the negative electrode non-coating portion 212A (e.g., by a laser). The negative electrode current collector plate 250 has an area equivalent or substantially equivalent to a cross-sectional area of the electrode assembly 210 in the Y-Z plane.

In one or more embodiments, the positive electrode current collector plate 240 and the negative electrode current collector plate 250 may each have a thickness of, for example, greater than or equal to approximately 1 mm.

## Claims

1. A secondary battery (200) comprising:
an electrode assembly (210) comprising a positive electrode plate (211) having a positive electrode non-coating portion (211A), a negative electrode plate (212) having a negative electrode non-coating portion (212A), and a separator (213) between the positive electrode plate (211) and the negative electrode plate (212), the positive electrode non-coating portion (211A) and the negative electrode non-coating portion (212A) being exposed at opposite sides of the electrode assembly (210);
a case (120) having a top opening and an internal space accommodating the electrode assembly (210);
a cap plate (130) sealing the top opening of the case (120);
a positive electrode current collector plate (240) perpendicular to the positive electrode non-coating portion (211A) and welded to the positive electrode non-coating portion (211A);
a negative electrode current collector plate (250) perpendicular to the negative electrode non-coating portion (212A) and welded to the negative electrode non-coating portion (212A);
a positive electrode terminal (160) on the cap plate (130) and electrically connected to the positive electrode current collector plate (240);
a negative electrode terminal (170) on the cap plate (130) and electrically connected to the negative electrode current collector plate (250),
wherein the electrode assembly (210) further comprises a second separator (213), and the positive electrode plate (211), the separator (213), the negative electrode plate (212), and the second separator (213) are sequentially stacked along a Y-axis direction, and wherein a laser welding line joining the positive electrode current collector plate (240) to the positive electrode non-coating portion (211A) is formed along the Y-axis direction, and a laser welding line joining the negative electrode current collector plate (250) to the negative electrode non-coating portion (212A) is formed along the Y-axis direction, and
wherein the positive electrode non-coating portion (211A) is in line-contact with the positive electrode current collector plate (240) and the negative electrode non-coating portion (212A) is in line-contact with the negative electrode current collector plate (250).

2. The secondary battery of claim 1, wherein at least one of the positive electrode current collector plate (240) and the negative electrode current collector plate (250) has an area equivalent to a cross sectional area of the electrode assembly (210).

## Patentansprüche

1. Sekundärbatterie (200), umfassend:
eine Elektrodenbaugruppe (210), die eine positive Elektrodenplatte (211) mit einem beschichtungslosen Abschnitt (211A) der positiven Elektrode, eine negative Elektrodenplatte (212) mit einem beschichtungslosen Abschnitt (212A) der negativen Elektrode und einen Separator (213) zwischen der positiven Elektrodenplatte (211) und der negativen Elektrodenplatte (212) umfasst, wobei der beschichtungslose Abschnitt (211A) der positiven Elektrode und der beschichtungslose Abschnitt (212A) der negativen Elektrode an gegenüberliegenden Seiten der Elektrodenbaugruppe (210) freiliegen;
ein Gehäuse (120) mit einer Öffnung in der Oberseite und einem Innenraum, der die Elektrodenbaugruppe (210) aufnimmt;
eine Deckplatte (130), die die Öffnung in der Oberseite des Gehäuses (120) verschließt;
eine Stromkollektorplatte (240) der positiven Elektrode, lotrecht zu dem beschichtungslosen Abschnitt (211A) der positiven Elektrode verlaufend und angeschweißt an dem beschichtungslosen Abschnitt (211A) der positiven Elektrode,
eine Stromkollektorplatte (250) der negativen Elektrode, lotrecht zu dem beschichtungslosen Abschnitt (212A) der negativen Elektrode verlaufend und angeschweißt an dem beschichtungslosen Abschnitt (212A) der negativen Elektrode,
einen positiven Elektrodenanschluss (160) auf der Deckplatte (130) und elektrisch an die Stromkollektorplatte (240) der positiven Elektrode angeschlossen;
einen negativen Elektrodenanschluss (170) auf der Deckplatte (130) und elektrisch an die Stromkollektorplatte (250) der negativen Elektrode angeschlossen;
wobei die Elektrodenbaugruppe (210) ferner einen zweiten Separator (213) umfasst und die positive Elektrodenplatte (211), der Separator (213), die negative Elektrodenplatte (212) und der zweite Separator (213) der Reihe nach entlang einer Y-Achsenrichtung gestapelt sind und wobei eine Laserschweißlinie, die die Stromkollektorplatte (240) der positiven Elektrode und den beschichtungslosen Abschnitt (211A) der positiven Elektrode zusammenfügt, entlang der Y-Achsenrichtung ausgebildet ist und eine Laserschweißlinie, die die Stromkollektorplatte (250) der negativen Elektrode und den beschichtungslosen Abschnitt (212A) der negativen Elektrode zusammenfügt, entlang der Y-Achsenrichtung ausgebildet ist und
wobei der beschichtungslose Abschnitt (211A) der positiven Elektrode in Linienkontakt mit der Stromkollektorplatte (240) der positiven Elektrode steht und der beschichtungslose Abschnitt (212A) der negativen Elektrode in Linienkontakt mit der Stromkollektorplatte (250) der negativen Elektrode steht.

2. Sekundärbatterie nach Anspruch 1, wobei mindestens eine aus der Stromkollektorplatte (240) der positiven Elektrode und der Stromkollektorplatte (250) der negativen Elektrode eine Fläche aufweist, die einer Querschnittsfläche der Elektrodenbaugruppe (210) entspricht.

## Revendications

1. Batterie secondaire (200) comprenant :
un ensemble d'électrodes (210) comprenant une plaque d'électrode positive (211) ayant une partie non revêtue d'électrode positive (211A), une plaque d'électrode négative (212) ayant une partie non revêtue d'électrode négative (212A), et un séparateur (213) entre la plaque d'électrode positive (211) et la plaque d'électrode négative (212), la partie non revêtue d'électrode positive (211A) et la partie non revêtue d'électrode négative (212A) étant exposées au niveau de côtés opposés de l'ensemble d'électrodes (210) ;
un boîtier (120) ayant une ouverture supérieure et un espace interne logeant l'ensemble d'électrodes (210) ;
une plaque de recouvrement (130) fermant de manière étanche l'ouverture supérieure du boîtier (120) ;
une plaque collectrice de courant d'électrode positive (240) perpendiculaire à la partie non revêtue d'électrode positive (211A) et soudée à la partie non revêtue d'électrode positive (211A) ;
une plaque collectrice de courant d'électrode négative (250) perpendiculaire à la partie non revêtue d'électrode négative (212A) et soudée à la partie non revêtue d'électrode négative (212A) ;
une borne d'électrode positive (160) sur la plaque de recouvrement (130) et connectée électriquement à la plaque collectrice de courant d'électrode positive (240) ;
une borne d'électrode négative (170) sur la plaque de recouvrement (130) et connectée électriquement à la plaque collectrice de courant d'électrode négative (250),
dans laquelle l'ensemble d'électrodes (210) comprend en outre un second séparateur (213), et la plaque d'électrode positive (211), le séparateur (213), la plaque d'électrode négative (212), et le second séparateur (213) sont empilés séquentiellement le long d'une direction d'axe Y, et
dans laquelle une ligne de soudage laser joignant la plaque collectrice de courant d'électrode positive (240) à la partie non revêtue d'électrode positive (211A) est formée le long de la direction d'axe Y, et une ligne de soudage laser joignant la plaque collectrice de courant d'électrode négative (250) à la partie non revêtue d'électrode négative (212A) est formée le long de la direction d'axe Y, et
dans laquelle la partie non revêtue d'électrode positive (211A) est en contact linéaire avec la plaque collectrice de courant d'électrode positive (240) et la partie non revêtue d'électrode négative (212A) est en contact linéaire avec la plaque collectrice de courant d'électrode négative (250).

2. Batterie secondaire selon la revendication 1, dans laquelle au moins l'une de la plaque collectrice de courant d'électrode positive (240) et de la plaque collectrice de courant d'électrode négative (250) a une surface équivalente à une surface en coupe transversale de l'ensemble d'électrodes (210).
